# EUROPEAN PATENT APPLICATION

(11) **EP 3 343 048 A1**
(43) Date of publication of application: **04.07.2018**
(21) Application number: 16207169.0
(22) Date of filing: 28.12.2016
(51) Int. Cl.: F16B 25/00

(54) **SCREW**

(71) Applicant: Saint-Gobain Placo, 92150 Suresnes (FR)
(72) Inventor: LOMBARD, Pierre, 75014 Paris (FR)
(74) Representative: Saint-Gobain Recherche

(57) **Abstract**

This screw (20) comprises a head (3) and a shank (1) which is provided with a main thread (13), the head (3) being configured to be housed in the material of the plate (16) in the fixed configuration and having a generally frusto-conical portion (7) which flares from the shank (1). The shank (1) comprises a textured portion (4) positioned between the frusto-conical portion (7) and the main thread (13), this textured portion (4) comprising successively alternating projecting parts (12) and recessed parts (10) along the shank (1), the diameter (d₁₂) defined by the projecting parts (12) being strictly greater than the diameter (d₁₃) of the main thread (13).

## Description

The present invention relates to a screw for fixing a plate to a base, and to a method for fixing a plate to a base by means of such a screw. The screw according to the invention can be used, in particular, for fastening plate- or sheet-type materials of wood, plaster, etc., to a base material such as a metal or wood profile, etc., into which the screw is threaded.

There is a wide variety of screws on the market that differ due to different aspects, such as the diameter of the thread, the material, the attack end of the shank, the shape of the screw head, etc.

In addition to these differentiating aspects, there are some screws on the market that have flaps projecting from the skank of the screw in the area of the tip. Such flaps allow an over-diameter to be created in the material to be fastened, preventing the material from lifting up. A problem of "lifting" or "jacking" may occur when a screw is used to fasten a material to a substrate, due to the fact that when the screw is rotated, the material rises up towards the screw head faster than the tip of the screw moves into the substrate. Thanks to the presence of flaps in the area of the tip, the screw is not threaded into the material that will be attached.

However, it has been observed that when the flaps come into contact with a metal profile, they break and the screw threads on said profile. In certain applications, when the flaps come into contact with the metal profile, which has a small thickness, the profile into which the screw is to be threaded is damaged, thus weakening the base material and making it easy for the screw to be cross-threaded during the process of being screwed into the metal. In addition, the screw cannot be reused nor easily removed, since the flaps break once they come into contact with the base material.

The invention intends more particularly to remedy these drawbacks by proposing a screw which makes it possible to create an over-diameter in a material to be fastened to a base, so as to ensure a correct positioning of the screw head in the material to be attached, without damaging the fastened material or the base.

To this end, one subject of the invention is a screw for fixing a plate to a base, said screw comprising a head and a shank which is provided with a main thread, the head being configured to be housed in the material of the plate in the fixed configuration, the head having a generally frusto-conical portion which flares from the shank, characterized in that the shank comprises a textured portion positioned between the frusto-conical portion of the head and the main thread of the shank, the textured portion comprising successively alternating projecting parts and recessed parts along the shank, the diameter defined by the projecting parts of the textured portion being strictly greater than the diameter of the main thread.

Given these characteristics, the following advantages are obtained:
- It creates an over-diameter in the plate to be attached, which makes it possible to enter the screw head in the plate, with the screw head possibly being completely hidden, and facilitates this process of concealing and setting the screw in the material to be fastened, ensuring good cooperation between the screw head and the material to be fastened. According to the invention, an over-diameter is a portion of the hole initially created by the attack portion of the screw shank having the main thread, which is increased in diameter by the textured portion located between the attack portion of the screw shank and the screw head;
- The position of the textured portion far from the tip of the screw makes it possible to create an over-diameter only in a region of the plate close to the screw head whereas at the other end, near the tip of the screw, the main thread of the screw cooperates with the material of the plate, thus preventing movement of the plate relative to the base;
- Concealment of the screw due to the over-diameter prevents cracking or damage to the surface of the material to be fastened. For example, it prevents damage to a plaster plate where the screw is inserted;
- The over-diameter is created in the plate by the textured portion, without the presence of flaps or other widening elements coming into contact with the profile or base material where the screw is threaded, thus preventing damage to the profile or base material;
- It facilitates the reuse of the screw since the screw is not damaged, and an operator or user can remove the screw and thread it again if necessary;
- It prevents having to drill the entire material to be fastened with the screw, since, as the textured portion is located in an area far from the tip, it does not create an over-diameter in all of the material to be drilled, which thus prevents the movement of the piece to be fastened, unlike the case in which an over-diameter is made throughout the entire hole of the material to be attached.
- Thanks to the presence of successively alternating projecting parts and recessed parts in the textured portion of the screw shank, an over-diameter is efficiently created in the plate, the projecting parts making it possible to abrade, reduce to powder, and compact or evacuate the material of the plate, while the recessed parts provide empty spaces for receiving the material of the plate removed by the projecting parts.

According to one feature, the textured portion comprises at least two successive projecting parts and a recessed part formed between the two projecting parts, so that the projecting and recessed parts successively alternate in the direction of the longitudinal axis of the shank.

According to one aspect of the invention, the diameter defined by the projecting parts of the textured portion is equal to or less than the maximum diameter of the frusto-conical portion of the screw head, preferably equal to the maximum diameter of the frusto-conical portion of the screw head, so that the screw head can be completely housed inside the material of the plate to be fastened in the fixed configuration.

According to one embodiment, the textured portion comprises abrasive nodules projecting relative to the shank, which form the projecting parts of the textured portion having recessed parts between them.

According to another embodiment, the textured portion comprises at least two annular ribs, which form the projecting parts of the textured portion having recessed parts between them. Preferably, each annular rib has an angle of inclination with respect to the longitudinal axis of the shank.

According to another embodiment, the textured portion comprises at least two turns of a secondary thread having an increased diameter compared to the diameter of the main thread, wherein the projecting parts of the textured portion are formed by the turns of the secondary thread and the recessed parts of the textured portion are formed between the turns of the secondary thread. The presence of at least two turns of the secondary thread means that the length of the secondary thread in the direction of the longitudinal axis of the shank is greater than or equal to the pitch of the secondary thread.

In a first variant, the secondary thread is a thread of reverse direction to the direction of the main thread, making it possible to abrade, reduce to powder and move the material of the plate at the periphery of the hole created in the plate by the main thread. In particular, the secondary thread can be a thread having a reverse direction to the direction of the main thread and a pitch equal to the pitch of the main thread.

In a second variant, the secondary thread is a thread having a pitch higher than the pitch of the main thread, which also makes it possible to abrade, reduce to powder and move the material of the plate at the periphery of the hole created in the plate by the main thread. In particular, the secondary thread can be a thread having a direction identical to the direction of the main thread and a pitch higher than the pitch of the main thread.

In all embodiments, the location of the textured portion close to the screw head and the adjusted diameter of the projecting parts, combined with the presence of the recessed parts providing empty spaces for receiving the material of the plate removed by the projecting parts, result in effective displacement of the material of the plate below the screw head. Thus, it is possible to avoid defects at the surface of the plate, such as defects due to screw head proudness when the screw head projects from the surface of the plate, or defects due to bulging of the material of the plate around the screw head.

According to an advantageous feature, the longitudinal dimension of the textured portion, parallel to the longitudinal axis of the shank, is greater than or equal to the pitch of the main thread, preferably greater than or equal to twice the pitch of the main thread. Thus, the over-diameter can be created efficiently through rotating movement of the textured portion in the material of the plate induced by screwing the screw into the material of the plate.

According to one embodiment, the textured portion comprises at least one wing extending, along the longitudinal axis of the shank, between two successive projecting parts of the textured portion. Such a wing helps to move the material removed from the plate when creating the over-diameter so as to evacuate or compact it in the recessed parts of the textured portion.

The longitudinal axis of the at least one wing extending between two successive projecting parts of the textured portion can have an angle of inclination with respect to the longitudinal axis of the shank. More specifically, the mean plane of the at least one wing can be inclined, relative to the longitudinal axis of the shank, so that the end of the wing furthest from the head is circumferentially in front of the rest of the wing in the screwing direction of the screw. Such an inclined wing makes it possible to move more efficiently the material removed from the plate when screwing the screw in the plate to be fastened.

Advantageously, the at least one wing extending between two successive projecting parts of the textured portion has a curved shape with respect to a mean plane of the wing, so as to form a concavity directed towards the forward in the screwing direction of the screw. Such a concavity makes it possible to move more easily the material removed from the plate when creating the over-diameter, in a way similar to a shovel.

Preferably, the textured portion comprises two wings extending between two successive projecting parts of the textured portion, the two wings being located in diametrically opposed positions. This ensures stability when screwing the screw in the plate to be fastened.

According to another aspect of the invention, the head of the screw is configured to be completely concealed in the material of the plate in the configuration where the plate is fixed to the base. In one embodiment, the head of the screw has a flat end portion which is configured to be set back from, or flush with, a main surface of the plate in the configuration where the plate is fixed to the base. In this way, there is no protruding element at the surface of the plate in the fixed configuration, which is advantageous for the visual aspect of the plate which may be part of a wall. More specifically, due to the screw heads lying flat with the surface of the plates forming the wall, in installations where the wall is not finished the result looks neater, whereas in installations where jointing and finishing coats are applied, jointing and finishing can be done more efficiently and more qualitatively.

In one embodiment, the flat portion of the head has, on its periphery, cutting means directed towards the shank of the screw. Such cutting means make it possible to obtain a clean cut at the surface of the plate to be fixed, which is formed by a paper sheet in the case of a plasterboard.

Preferably, the distance between the end of the head opposite from the shank and the end of the projecting part of the textured portion furthest from the head is less than or equal to the thickness of the portion of the plate intended to be fixed on the base by means of the screw. Thus, the textured portion of the screw is housed in the plate in the fixed configuration and does not come into contact with the base material. In this way, damage to the base material is prevented.

In one embodiment, on the opposite side from the head, the end of the screw shank has a pointed shape. In another embodiment, on the opposite side from the head, the end of the screw shank has a drill-like shape.

Another subject of the invention is the use of a screw as described above for fixing a plaster-based plate on a base, such as a profile made of metal or wood.

Another subject of the invention is a method for fixing a plate to a base by means of a screw as described above, comprising screwing the screw in the material of the plate and the material of the base until the head of the screw is concealed in the material of the plate.

The features and advantages of the invention will become apparent from the following description of several embodiments of a screw according to the invention, given solely by way of example and with reference to the appended drawings in which:
Figure 1 is an elevation view of a first embodiment of a screw according to the invention, in fixed configuration of a plaster-based plate to a base profile by means of the screw;
Figure 2 is a top view of the screw head of Figure 1;
Figure 3 is an elevation view of a second embodiment of a screw according to the invention, in fixed configuration of a plaster-based plate to a base profile by means of the screw;
Figure 4 is an elevation view of a third embodiment of a screw according to the invention;
Figure 5 is a perspective view of a fourth embodiment of a screw according to the invention;
Figure 6 is an elevation view of the screw of Figure 5; and
Figure 7 is an elevation view of an alternative embodiment of the end of the screw of the invention.

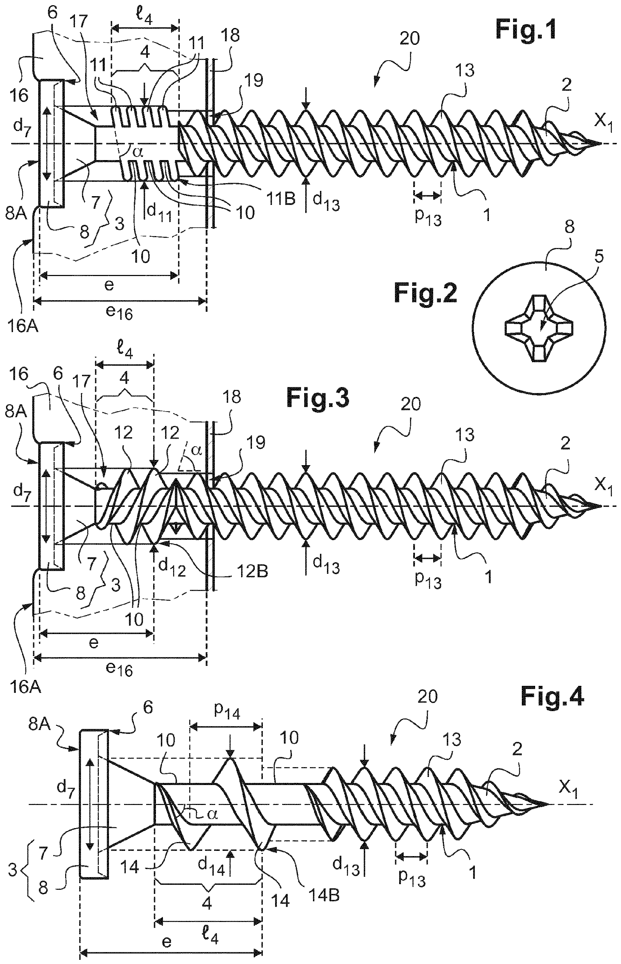

In the first embodiment shown in figures 1 and 2, the screw 20 comprises a shank 1 provided with a main thread 13 that ends in a final attack portion with a pointed shape 2 and on the opposite end it has a countersunk head 3, with a textured portion 4 next to the head, which is located along a portion of the shank without threading. The screw 20 is designed to fix a plate to a base material, in particular a plaster-based plate to a metal or wood profile.

The head 3 of the screw includes a generally frusto-conical portion 7 which flares from the shank 1, and a flat portion 8 which forms the end of the head 3 opposite from the shank 1. In a classical manner, the head 3 is provided with a recess 5 for receiving a screwing tool on its face oriented away from the shank 1, as shown in Figure 2.

In the first embodiment, the textured portion 4 comprises a plurality of annular ribs 11, e.g. four annular ribs 11, which are inclined with respect to the longitudinal axis X₁ of the shank 1 with an angle of inclination α. The projecting parts of the textured portion 4 are formed by the annular ribs 11, while the recessed parts 10 of the textured portion 4 are the spaces formed between the annular ribs 11. As can be seen in Figure 1, the diameter d₁₁ defined by the points of the ribs 11 that protrude the most is greater than the diameter d₁₃ of the main thread 13 of the screw shank 1. In addition, the diameter d₁₁ defined by the points of the annular ribs 11 that protrude the most is equal to the diameter d₇ of the frusto-conical portion 7 of the screw head. In this way, an over-diameter corresponding to the diameter of the portion 7 of the screw head can be created in a plate to be fixed, and the screw head 3 can be completely concealed inside the material of the plate in the fixed configuration.

Figure 1 illustrates a plaster-based plate 16 fixed to a metal profile 18 by means of the screw 20. This figure clearly shows that an over-diameter 17 is created in the plate 16 close to the screw head 3, having the diameter d₁₁ as defined by the annular ribs 11, which is greater than the diameter d₁₃ of the hole 19 created by the main thread 13 in the plate 16 and the metal profile 18. The distance e between the end 8A of the head 3 opposite from the shank 1 and the end 11 B of the annular rib 11 furthest from the head 3 is less than the thickness e₁₆ of the portion of the plate 16, so that the ribs 11 are housed in the plate 16 in the fixed configuration and do not come into contact with the metal profile 18, thus preventing damage to the metal profile 18.

As shown in Figure 1, the head 3 of the screw is configured to be set back from, or flush with, the main surface 16A of the plate 16 in the fixed configuration, and the flat portion 8 of the head has a cutting edge 6 on its periphery directed towards the shank 1 of the screw, so as to guarantee a clean cut in the paper sheet forming the surface of the plate 16.

Advantageously, since the textured portion 4 is located close to the head 3, the over-diameter is created only in a limited region of the plate to be fixed, which thus prevents the movement of the plate to be fixed. The longitudinal dimension ℓ₄ of the textured portion 4, parallel to the longitudinal axis X₁ of the shank 1, is greater than twice the pitch p₁₃ of the main thread 13, so that the over-diameter can be created efficiently by screwing the screw in the material of the plate 16.

The location of the textured portion 4 close to the head 3 and the adjusted diameter of the annular ribs 11, combined with the presence of the recessed parts 10 providing empty spaces for receiving the material of the plate 16 removed by the ribs 11, result in effective displacement of the material of the plate 16 below the screw head 3. This improves the process of concealing and setting the screw head 3 in the plate 16. Preferably, the pitch and/or the thickness of the annular ribs 11 are chosen to be different from those of the turns of the main thread 13, so that the ribs 11 can abrade, reduce to powder and move the material of the plate 16 at the periphery of the hole created by the main thread 13, when the screw 20 is screwed in the plate 16.

In the second embodiment shown in Figure 3, those elements which are analogous to those of the first embodiment bear identical reference signs. The screw 20 of the second embodiment differs from the first embodiment in that the textured portion 4 comprises, instead of annular ribs 11, a secondary thread 12 of reverse direction to the direction of the main thread 13. The projecting parts of the textured portion 4 are formed by a plurality of turns, e.g. two turns, of the reverse thread 12, while the recessed parts 10 of the textured portion 4 are the spaces formed between the successive turns of the reverse thread 12. As can be seen in Figure 3, the diameter d₁₂ defined by the points of the reverse thread 12 that protrude the most is greater than the diameter d₁₃ of the main thread 13. In addition, the diameter d₁₂ defined by the points of the reverse thread 12 that protrude the most is equal to the diameter d₇ of the frusto-conical portion 7 of the screw head. In this way, an over-diameter corresponding to the diameter of the portion 7 of the screw head can be created in the plate 16 to be fixed, and the screw head 3 can be completely concealed inside the material of the plate 16 in the fixed configuration. The pitch of the secondary thread 12 can be equal to the pitch p₁₃ of the main thread 13. Thanks to the reverse direction of the secondary thread 12 compared to that of the main thread 13, the secondary thread 12 can abrade, reduce to powder and move the material of the plate 16 at the periphery of the hole created by the main thread, when the screw 20 is screwed in the plate 16.

In the third embodiment shown in Figure 4, those elements which are analogous to those of the first embodiment bear identical reference signs. The screw 20 of the third embodiment differs from the second embodiment in that the textured portion 4 comprises, instead of a reverse thread 12, a secondary thread 14 having a direction identical to the direction of the main thread 13 and a pitch p₁₄ increased compared to the pitch p₁₃ of the main thread 13. The projecting parts of the textured portion 4 are formed by a plurality of turns, e.g. two turns, of this secondary thread 14 of higher pitch, while the recessed parts 10 of the textured portion 4 are formed between the successive turns of the secondary thread 14 of higher pitch. As can be seen in Figure 4, the diameter d₁₄ defined by the points of the secondary thread 14 that protrude the most is greater than the diameter d₁₃ of the main thread 13. In addition, the diameter d₁₄ defined by the points of the secondary thread 14 that protrude the most is equal to the diameter d₇ of the frusto-conical portion 7 of the screw head. In the same way as in the second embodiment, an over-diameter corresponding to the diameter of the portion 7 of the screw head can be created in the plate 16 to be fixed, so that the screw head 3 can be completely concealed inside the material of the plate 16 in the fixed configuration. Thanks to the higher pitch p₁₄ of the secondary thread 14 compared to that of the main thread 13, the secondary thread 14 can abrade, reduce to powder and move the material of the plate 16 at the periphery of the hole created by the main thread 13, when the screw 20 is screwed in the plate 16.

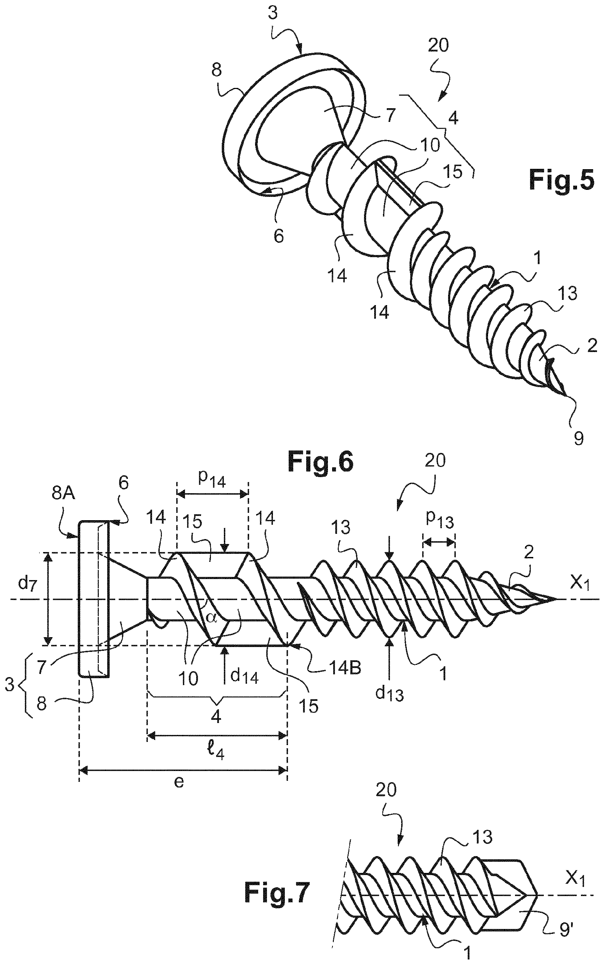

In the fourth embodiment shown in figures 5 and 6, those elements which are analogous to those of the first embodiment bear identical reference signs. The screw 20 of the fourth embodiment differs from the third embodiment in that the textured portion 4 comprises, in addition to the secondary thread 14 of higher pitch p₁₄, two wings 15 each extending between two successive turns of the secondary thread 14, while being axially aligned with respect to the longitudinal axis X₁ of the shank 1. The two wings 15 are rectangular tabs located in diametrically opposed positions. Such wings 15 contribute to the displacement of the material removed from the plate 16 for the creation of the over-diameter. Advantageously, the diameter defined by the points of the wings 15 that protrude the most is equal to the diameter d₁₄ of the secondary thread 14 of higher pitch.

According to a variant of the fourth embodiment not shown in the figures, the wings 15 can be inclined with respect to the longitudinal axis X₁ of the shank 1, so that the end of each wing 15 furthest from the head is circumferentially in front of the rest of the wing in the screwing direction of the screw 20. Such inclined wings 15 make it possible to move more efficiently the material of the plate when screwing the screw. According to another variant, also not shown, each wing 15 can have a curved shape with respect to a mean plane of the wing, so as to form a concavity directed towards the forward in the screwing direction of the screw 20. Such a concavity makes it possible to move more easily the material removed from the plate when creating the over-diameter, in a way similar to a shovel.

Figure 7 shows a possible variant for the end of the screw 20 of the invention, which may be applied to any of the embodiments described above instead of the end 9 of pointed shape. In this variant, the end 9' of the shank 1 of the screw 20 opposite from the head 3 has a drill-like shape, which may be advantageous for the fixing of a plate on a profile of thickness higher than 0.8 mm.

The invention is not restricted to the examples described and shown. In particular, the textured portion of the screw may comprise, instead of annular ribs or secondary threads, any type of texture, such as abrasive nodules projecting relative to the screw shank. Regardless of the embodiment, in a screw according to the invention, the diameter defined by the points of the textured portion that protrude the most is strictly greater than the diameter of the main thread, and preferably equal to the maximum diameter of a frusto-conical portion of the screw head, so that the latter can be properly housed in the material of a plate fixed by means of the screw.

## Claims

1. A screw (20) for fixing a plate (16) to a base (18), said screw comprising a head (3) and a shank (1) which is provided with a main thread (13), the head (3) being configured to be housed in the material of the plate (16) in the fixed configuration, the head (3) having a generally frusto-conical portion (7) which flares from the shank (1), **characterized in that** the shank (1) comprises a textured portion (4) positioned between the frusto-conical portion (7) of the head (3) and the main thread (13) of the shank (1), the textured portion (4) comprising successively alternating projecting parts (11; 12; 14) and recessed parts (10) along the shank (1), the diameter (d₁₁; d₁₂; d₁₄) defined by the projecting parts (11; 12; 14) of the textured portion (4) being strictly greater than the diameter (d₁₃) of the main thread (13).

2. The screw according to claim 1, **characterized in that** the diameter (d₁₀, d₁₂, d₁₄) defined by the projecting parts (10, 12, 14) of the textured portion (4) is equal to or less than the maximum diameter (d₇) of the frusto-conical portion (7) of the screw head (3), preferably equal to the maximum diameter (d₇) of the frusto-conical portion (7) of the screw head (3).

3. The screw according to either one of claims 1 and 2, **characterized in that** the textured portion (4) comprises abrasive nodules projecting relative to the shank (1).

4. The screw according to any one of the preceding claims, **characterized in that** the textured portion (4) comprises at least two annular ribs (11).

5. The screw according to claim 4, **characterized in that** each rib (11) has an angle of inclination (α) with respect to the longitudinal axis (X₁) of the shank (1).

6. The screw according to any one of the preceding claims, **characterized in that** the textured portion (4) comprises at least two turns of a secondary thread (12) of reverse direction to the direction of the main thread (13).

7. The screw according to any one of the preceding claims, **characterized in that** the textured portion (4) comprises at least two turns of a secondary thread (14) having a pitch (p₁₄) higher than to the pitch (p₁₃) of the main thread (13).

8. The screw according to any one of the preceding claims, **characterized in that** the longitudinal dimension (ℓ₄) of the textured portion (4), parallel to the longitudinal axis (X₁) of the shank (1), is greater than or equal to the pitch (p₁₃) of the main thread (13), preferably greater than or equal to twice the pitch (p₁₃) of the main thread (13).

9. The screw according to any one of the preceding claims, **characterized in that** the textured portion (4) comprises at least one wing (15) extending, along the longitudinal axis (X₁) of the shank (1), between two successive projecting parts (11; 12; 14).

10. The screw according to claim 9, **characterized in that** the at least one wing (15) has an angle of inclination with respect to the longitudinal axis (X₁) of the shank (1), and/or has a curved shape with respect to a mean plane (P) of the wing so as to form a concavity directed towards the forward in the screwing direction of the screw.

11. The screw according to any one of the preceding claims, **characterized in that** the head (3) has a flat end portion (8) configured to be set back from, or flush with, a main surface (16A) of the plate (16) in the fixed configuration.

12. The screw according to claim 11, **characterized in that** the flat portion (8) has, on its periphery, cutting means (6) directed towards the shank (1) of the screw.

13. The screw according to any one of the preceding claims, **characterized in that** the distance (e) between the end (8A) of the head (3) opposite from the shank (1) and the end (11B; 12B; 14B) of the projecting part (11; 12; 14) furthest from the head (3) is less than or equal to the thickness (e₁₆) of the portion of the plate (16) intended to be fixed on the base (18) by means of the screw.

14. Use of a screw according to any one of the preceding claims for fixing a plaster-based plate (16) on a base (18), such as a profile made of metal or wood.

15. A method for fixing a plate (16) to a base (18) by means of a screw according to any one of claims 1 to 13, comprising screwing the screw in the material of the plate (16) and the material of the base (18) until the head (3) of the screw is concealed in the material of the plate (16).
